# EUROPÄISCHE PATENTSCHRIFT

(11) **EP 1 834 075 B1**
(45) Veröffentlichungstag und Bekanntmachung des Hinweises auf die Patenterteilung: **26.03.2008**
(21) Anmeldenummer: 05823711.6
(22) Anmeldetag: 22.12.2005
(51) Int. Cl.: F02F 1/24, B22C 9/10, F02F 1/36

(54) **ZYLINDERKOPFKÜHLMANTEL**
COOLING JACKET FOR A CYLINDER HEAD
CHEMISE DE REFROIDISSEMENT DE CULASSE DE CYLINDRE

(30) Priorität: 07.01.2005 DE 102005001023
(43) Veröffentlichungstag der Anmeldung: 19.09.2007
(73) Patentinhaber: FEV Motorentechnik GmbH, 52078 Aachen (DE)
(72) Erfinder: HILDEBRAND, Olaf, 52477 Alsdorf (DE); KÜSTERS, André, 52525 Waldfeucht (DE); GRAFEN, Marc, 52146 Würselen (DE)
(74) Vertreter: Maxton Langmaack & Partner
(86) Internationale Anmeldenummer: PCT/EP2005/013848
(87) Internationale Veröffentlichungsnummer: WO 2006/072400

(56) Entgegenhaltungen:
- DE-A1- 3 546 436

## Beschreibung

Die vorliegende Erfindung betrifft einen Kühlmantel-Gießkern eines Zylinderkopfes einer Mehrzylinder-Verbrennungskraftmaschine sowie einen Zylinderkopf und ein zugehöriges Verfahren zur Herstellung des Zylinderkopfes.

Eine Weiterentwicklung von Kolben-Verbrennungskraftmaschinen führt im Zuge einer gewünschten Leistungssteigerung zu einem höheren Kolbenarbeitsdruck. Dies stellt insbesondere bei gleichzeitiger Forderung nach einem geringen Baugewicht erhöhte Anforderungen an eine mechanische Stabilität eines Zylinderkopfes. Es wird versucht, mittels geeigneter Zylinderkopfkonstruktionen dem Rechnung zu tragen. Beispielsweise geht aus der WO2004/038206A1 ein formsteifer Zylinderkopf hervor.

Aufgabe der vorliegenden Erfindung ist es, eine Druckbelastbarkeit eines Zylinderkopfes zu verbessern und eine leichte Herstellbarkeit eines derartigen Zylinderkopfes zu gewährleisten.

Erfindungsgemäß wird diese Aufgabe durch einen Kühlmantel-Gießkern eines Zylinderkopfes nach Anspruch 1, einen Zylinderkopf nach Anspruch 11. und ein Verfahren zur Herstellung eines Zylinderkopfes nach Anspruch 20 gelöst. Weitere vorteilhafte Ausgestaltungen und Weiterbildungen sind in den jeweiligen abhängigen Ansprüchen angegeben.

Ein erfindungsgemäßer Kühlmantel-Gießkern zur Herstellung eines Zylinderkopfes einer Verbrennungskraftmaschine umfasst wenigstens eine Abformung eines Kühlmantels. Der Kühlmantel-Gießkern weist im wesentlichen in Richtung einer Kurbelwellen-Längsachse einen wenigstens sich teilweise erstreckenden Spalt auf, der den Kühlmantel-Gießkern zumindest in einem Abschnitt trennt. Gemäß einer Weiterbildung verläuft der Spalt zumindest teilweise in der Abformung des Kühlmantels. Vorzugsweise weist der Spalt zumindest näherungsweise eine Höhe auf, die senkrecht zu der Längsachse des Kühlmantel-Gießkerns angeordnet ist. Diese Längserstreckung des Spaltes verläuft parallel zu einer dem Zylinderkopf in einer Verbrennungskraftmaschine zuzuordnenden Kurbelwelle.

Durch die zumindest teilweise Trennung des Kühlmantel-Gießkernes wird eine entsprechende längserstreckte Struktur in Form eines Steges aus Gussmaterial beim Gießen gebildet, der vorzugsweise mit einem Oberdeck und/oder einem Flammdeck verbunden ist. Die innere Abformung des Kühlmantels formt den beim Gießvorgang zu bildenden Kühlmantel. Die Abformung des Kühlmantels weist vorzugsweise mehrere Abformungen von Leitungsansätzen auf, um im resultierenden Kühlmantel eine Ein- und Ausspeisung eines Kühlmittels, bevorzugt Wasser, zur Kühlung zu ermöglichen. Vorzugsweise bildet der Kühlmantel-Gießkern senkrecht zu einem Flammdeck ein im wesentlichen zusammenhängendes Volumen. Insbesondere ist eine Kühlmittelzirkulation zwischen einem Oberdeck und dem Flammdeck im resultierenden Kühlmantel möglich.

Bevorzugt erstreckt sich der trennende Spalt über eine volle Höhe des Kühlmantel-Gießkernes. Insbesondere entsteht dadurch beim Gießen eine längserstreckte Struktur, die das Oberdeck und das Flammdeck miteinander verbindet.

In einer vorteilhaften Variante erstreckt sich der Spalt zumindest annähernd entlang des gesamten Kühlmantel-Gießkerns. Bevorzugt erstreckt sich die Trennung über einen Bereich, der in einem Zylinderkopf einer Verbrennungskraftmaschine Zylinder zugeordnet ist. Bei einer Reihenzylinderanordnung erstreckt sich beispielsweise der Spalt von einem ersten bis zu einem letzten Zylinder.

In einer weiteren Variante ist vorgesehen, dass der Spalt eine invertierte Gitterstruktur oder/und Bogenstruktur aufweist. Dadurch wird beim Gießvorgang insbesondere eine Gitterstruktur oder/und eine Bogenstruktur aus Gussmaterial gebildet, die vorzugsweise das Oberdeck mit dem Flammdeck verbindet. Insbesondere ermöglicht eine Gitterstruktur eine leichte Bauweise bei vorzugsweise nur geringfügig verringerter Stabilität. Eine Bogenstruktur ist dabei insbesondere brückenbogenartig ausgestaltet.

In einer bevorzugten Ausgestaltung ist vorgesehen, dass der Kühlmantel-Gießkern wenigstens zweiteilig ist. Insbesondere umfasst der Kühlmantel-Gießkern zumindest ein erstes Teil mit einer Abformung eines ersten Kühlmantels und ein zweites Teil mit einer Abformung eines zweiten Kühlmantels. Vorzugsweise weisen sowohl das erste als auch das zweite Teil Abformungen jeweils zumindest eines Ein- und Ausströmungsleitungsansatzes auf. Bevorzugt bilden beide Teile des Kühlmantels unabhängig voneinander durchströmbare Kühlmäntel.

Insbesondere für einen Zugang zu einem mit dem Zylinderkopf abzudeckenden Zylinder ist vorgesehen, dass der Kühlmantel-Gießkern vorzugsweise zumindest näherungsweise senkrecht zur Längsachse zur Bildung wenigstens einer Aussparung für wenigstens einen Dom oder eine Pfeife, insbesondere wenigstens eines Injektors und/oder wenigstens eines Gasein- und/oder Gasauslasses und/oder einer Verschraubung, durchbrochen ist. Beispielsweise ist in einem Bereich eines Zylinders einer dem Zylinderkopf zuzuordnenden Verbrennun.gskraftmaschine jeweils eine Pfeife für einen Injektor zur Zuführung eines Ladungsfluids, für ein Gaswechselventil und/oder eine Einspritzdüse zur Kraftstoffeinspritzung vorgesehen. In Bezug auf eine Normale des zugehörigen Flammdecks können die vorzusehenden Pfeifen einen von Null verschiedenen Winkel bilden. Der Spalt geht vorzugsweise in eine Mehrzahl von Aussparungen über und verbindet diese miteinander, wobei die Aussparungen jeweils zu einem inversen Abbild einer Pfeife und/oder eines Domes zugehörig sind..

Vorzugsweise für eine verbesserte Kühlung eines Domes oder einer Pfeifen weist der Kühlmantel-Gießkern im Bereich der Aussparung eine Verbindung auf. Dadurch wird eine Umströmung des Domes oder der Pfeifen mit Kühlmittel im späteren Zylinderkopf gewährleistet.

Bevorzugt ist der Kühlmantel-Gießkern ein Sandkern. Gemäß einer anderen Ausgestaltung ist der Gießkern mittels eines Rapid-Prototyping-Systems hergestellt worden. Als Rapid-Prototyping-System sind derartige Vorrichtung zu verstehen, bei denen vorzugsweise mittels 3D-Datensätzen insbesondere aus CAD-Systemen Querschnitte erstellt und anschließend durch geeignete Herstellungsverfahren das zu fertigende Stück daraus erzeugt wird. Beispielsweise kann dazu die Stereolithographie, das selektive Lasersintern, LOM (Laminated Object Manufacturing) oder beispielsweise auch FDM (Fused Deposition Modelling) eingesetzt werden.

Gemäß einem weiteren Gedanken der Erfindung ist ein Zylinderkopf einer Mehrzylinder-Verbrennungskraftmaschine vorgesehen, der wenigstens ein Flammdeck, ein Oberdeck und einen Fluidkühlungsmäntel umfasst. Der Fluidkühlungsmantel ist mittels eines Steges, der sich vertikal und längs des Flammdecks und des Oberdecks erstreckt, zumindest über einen Abschnitt unterteilt. Der Steg verläuft vorzugsweise zumindest annähernd parallel zu einer dem Zylinderkopf in einer Verbrennungskraftmaschine zuzuordnenden Kurbelwelle. Der Steg ist vorzugsweise mit dem Flammdeck und/oder dem Oberdeck verbunden. Vorzugsweise bildet der im Zylinderkopf gebildete Kühlmantel senkrecht zum Flammdeck ein im wesentlichen zusammenhängendes Volumen. Insbesondere ist eine Kühlmittelzirkulation zwischen Flammdeck und Oberdeck möglich. Bevorzugt wird durch den Steg eine Versteifung des Flammdecks und/oder des Oberdecks erzielt. Der Steg kann insbesondere nicht-geradlinig verlaufen. Beispielsweise kann der Steg in Längsrichtung mäanderförmig, in Zickzackform oder allgemein unregelmäßig verlaufen. Beispielsweise werden Zylinderquerschnittsflächen der dem Zylinderkopf zuzuordnenden Verbrennungskraftmaschine jeweils in etwa mittig durchlaufen. Bei einem in etwa mittigen Verlauf wird eine Querschnittsfläche beispielsweise in etwa in gleich große Flächen geteilt, wobei der Verlauf des Steges innerhalb einer Querschnittsfläche unregelmäßig sein kann. Insbesondere können verschiedene Querschnittsflächen auf verschiedene Weise von dem Steg durchlaufen werden. Des weiteren kann der Steg auch außermittig durch die Querschnittsflächen oder neben den Querschnittsflächen verlaufen.

In einer weiteren Variante ist vorgesehen, dass der Steg sich über eine volle Höhe des Zylinderkopfes zwischen Flammdeck und Oberdeck erstreckt. Insbesondere verbindet der Steg Flammdeck und Oberdeck miteinander und bildet vorzugsweise eine Versteifung zwischen Flammdeck und Oberdeck.

Insbesondere für eine Gewichtsreduktion ist der Zylinderkopf so ausgestaltet, dass der Steg gitterförmig oder/und bogenförmig ist. Beispielsweise ist der Steg brückenbogenartig ausgestaltet. Des weiteren ist der Steg beispielsweise in Form von gitterförmigen Verstrebungen ausgeführt. Bevorzugt weist der Zylinderkopf eine Kombination beider Konstruktionsmerkmale auf.

Vorzugsweise erstreckt sich der Steg über zumindest annähernd eine Länge des gesamten Zylinderkopfes. Insbesondere überstreicht der Steg einen Bereich des Zylinderkopfes von einem ersten bis zu einem letzten Zylinder einer zugehörigen mehrzylindrigen Verbrennungskraftmaschine, wobei die Zylinder in Reihe angeordnet sind.

Der Steg weist eine insbesondere variierende Breite von 0,3 bis 15 mm, bevorzugt von 3 bis 10 mm, auf. Die Breite und somit eine Wandstärke des Steges kann über eine Höhe und vorzugsweise über eine Länge des Steges variieren. Beispielsweise weist der Steg in einem Verbindungsbereich insbesondere zum Flammdeck und/oder Oberdeck eine höhere Wandstärke auf als in einem mittleren Bereich zwischen Flammdeck und Oberdeck. Bevorzugt wird eine Wandstärke in einem Bereich eines erhöhten Wärmeeintrages für einen verbesserten Wärmeübergang dünner als im Mittel ausgestaltet.

Vorzugsweise für eine verbesserte Kühlung eines Domes oder einer Pfeife ist der Steg im Bereich des Domes oder der Pfeife durchbrochen. Die Unterbrechung ist dabei bevorzugt so ausgestaltet, dass der Dom oder die Pfeife, insbesondere der Dom eines Injektors, von Kühlmittel umströmt wird.

Insbesondere für eine Erhöhung einer Stabilität des Zylinderkopfes ist der Steg mit wenigstens einem Dom oder einer Pfeife verbunden. Je nach Lage ist der Steg beispielsweise bei einer Reihenmehrzylinderanordnung mit allen Injektordomen und/oder einer Reihe von Ventilpfeifen verbunden.

In einer weiteren Ausgestaltung ist vorgesehen, dass der Fluidkühlungsmantel wenigstens zwei Kühlmittelpfade mit insbesondere verschiedenen Volumina umfasst. Beispielsweise verlaufen zwei Kühlmittelpfade beidseitig der Trennung. Vorzugsweise sind beide Kühlmittelpfade jeweils an Längsenden der Trennung zusammengeführt. Beispielsweise fließen unterschiedliche Fluidmassenströme durch beide Kühlmittelpfade, wobei beispielsweise Ein- und Auslassventile unterschiedlich intensiv gekühlt werden können.

Bevorzugt ist der Fluidkühlungsmantel wenigstens zweiteilig. Insbesondere wird eine Trennung des Kühlmantels in einen ersten und einen zweiten Kühlmantel erzielt. Dazu ist die Trennung vorzugsweise zumindest in einem Bereich von einem ersten bis zu einem letzten Zylinder der dem Zylinderkopf zuzuordnenden Verbrennungskraftmaschine durchgängig über eine Länge und eine volle Höhe des Zylinderkopfes ausgeführt. Bevorzugt sind der erste und der zweite Kühlwassermantel unabhängig voneinander insbesondere mit getrennten Kühlmittelkreisläufen mit vorzugsweise verschiedenen Fluidmassenströmen durchströmbar. Vorzugsweise ist jeweils an Längsenden des ersten und des zweiten Kühlmantels jeweils ein Leitungsanschluss für beidseitig der Trennung verlaufenden Kühlwassermäntel vorgesehen.

Insbesondere für eine leichte Bauweise ist vorgesehen, dass als Zylinderkopfmaterial ein Leichtmetall, insbesondere eine Leichtmetalllegierung ausgewählt ist. Vorzugsweise ist als Material-Hauptbestandteil Aluminium und/oder Magnesium ausgewählt. Weiterhin besteht die Möglichkeit, Grauguß wie auch Vermikularguß zu verwenden.

Gemäß einem weiteren Gedanken der Erfindung ist ein Verfahren zur Herstellung eines Kühlmantels eines Zylinderkopfes einer Mehrzylinder-Verbrennungskraftmaschine mittels eines Gussverfahrens vorgesehen, wobei zur Erzeugung des Kühlmantels ein Kühlmantel-Gießkern verwendet wird, der so angeordnet ist, dass beim Vergießen ein in Richtung einer Längsachse angeordneter Steg gebildet wird, der den Kühlmantel zumindest abschnittsweise trennt und sich zumindest näherungsweise senkrecht zu einer Längserstreckung des Kühlmantels erstreckt.

Eine Weiterbildung sieht vor, dass der Kühlmantel-Gießkem vorzugsweise zumindest zweiteilig ist. Dieses erlaubt die Fertigung von sehr großen Gießkernen aus einzelnen Bestandteilen, die anschließend erst zusammengeführt werden müssen. Dadurch können die Gießkerne auch beispielsweise mittels kleineren Gießkern-Schießmaschinen hergestellt werden.

In einer bevorzugten Ausgestaltung ist vorgesehen, dass Teile des Kühlmantel-Gießkerns vorzugsweise in wenigstens einem Bereich einer Aussparung zur Bildung eines Domes oder einer Pfeife, insbesondere eines Injektors und/oder eines Gasein- und/oder Gasauslassventils, miteinander verbunden werden. Vorzugsweise wird eine Handhabung des Kühlmantel-Gießkernes, insbesondere eine sichere Ausrichtung der Teile zueinander, verbessert. Besonders bevorzugt erfolgt die Verbindung so, dass eine Umströmung des gebildeten Domes oder der gebildeten Pfeife und beispielsweise eines darin aufnehmbaren Injektors ermöglicht wird. Neben Teilen des Kühlmantel-Gießkerns kann für eine Verbindung auch wenigstens ein weiteres Teil eines Gießkernes, beispielsweise ein Gießkern eines Zylinderkopf-Zwischendecks, berücksichtigt werden. Insbesondere werden alle für einen Zylinderkopf benötigten Gießkerne vor dem Gießvorgang miteinander verbunden

Für eine Verbindung ist vorzugsweise vorgesehen, dass die Teile des Kühlmantel-Gießkerns miteinander verklebt werden. Die Teile können aber auch formschlüssig miteinander verbunden werden, vorzugsweise ohne eine weitere Befestigung.

Zur Erzielung einer leichten Bauweise wird als Gussmaterial vorzugsweise ein Leichtmetall oder eine Leichtmetalllegierung verwendet. Bevorzugt wird als Material-Hauptbestandteil Aluminium und/oder Magnesium ausgewählt.

Im folgenden wird die Erfindung anhand der Zeichnung in Beispielen im Einzelnen erläutert. Die Merkmale sind dort jeweils jedoch nicht auf die einzelnen Ausgestaltungen beschränkt. Vielmehr sind jeweils in der Zeichnung und/oder in der Beschreibung einschließlich der Figurenbeschreibung angegebene Merkmale jeweils untereinander zu Weiterbildungen kombinierbar.

Es zeigen:
Fig. 1 einen Kühlmantel-Gießkern eines Zylinderkopfes,
Fig. 2 einen schematischen Querschnitt eines Zylinderkopfes,
Fig. 3 einen ersten Steg,
Fig. 4 einen zweiten Steg und
Fig. 5 einen dritten Steg.

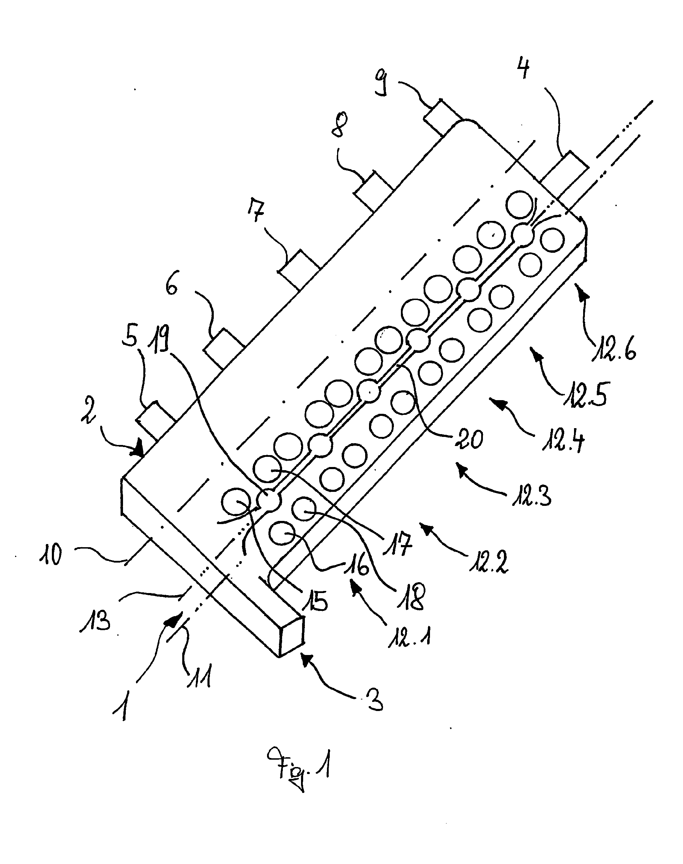

Fig. 1 zeigt einen Kühlmantel-Gießkern 1 eines Zylinderkopfes in vereinfachter, schematischer Ansicht. In diesem Fall handelt es sich um einen Zylinderkopf für einen Reihensechszylinderverbrennungsmotor. Es kann jedoch auch ein Zylinderkopf für jeden anderen Mehrzylindermotor vorgesehen werden, beispielsweise ein Drei- oder Vierzylindermotor. Der Kühlmantel-Gießkern 1 bildet einen Hohlraum im zu gießenden Zylinderkopf und stellt eine innere Abformung eines Kühlwassermantels 2 dar. Der Kühlmantel-Gießkern 1 bildet somit einen Kühlmittelpfad, insbesondere einen Kühlwasserpfad, in einem zugehörigen fertiggestellten Zylinderkopf. Zur Kühlwasserversorgung des zugehörigen Zylinderkopfes sind entsprechende Leitungsansätze vorgesehen. An Längsenden des Kühlmantel-Gießkernes ist eine Abformung eines ersten 3 und eines zweiten Leitungsansatzes 4 vorgesehen. Daneben sind weitere Leitungsansätze zur zusätzlichen Kühlmittelversorgung im Bereich von Aussparungen zur Versorgung der entsprechenden Zylinder der zugehörigen und hier nicht gezeigten Verbrennungskraftmaschine vorgesehen. An einer Längsseite befinden sich ein dritter 5, ein vierter 6, ein fünfter 7, ein sechster 8 sowie ein siebter Leitungsansatz 9. Entlang einer ersten Längsachse 10, insbesondere einer Kurbelwellen-Längsachse 11, sind mehrere Zylinderversorgungsbereiche angeordnet: ein erster 12.1, ein zweiter 12.2, ein dritter 12.3, ein vierter 12.4, ein fünfte 12.5 und ein sechster 12.6 Zylinderversorgungsbereich mit Aussparungen zur Versorgung der entsprechenden und hier nicht dargestellten sechs Zylinder. In jedem dieser Zylinderversorgungsbereiche sind jeweils eine erste 15, eine zweite 16, eine dritte 17 sowie eine vierte Aussparung 18 für Pfeifen für Ladungswechselventile angeordnet. In der Mitte des ersten Zylinderversorgungsbereiches 12.1 ist eine fünfte Aussparung 19 für einen Dom für ein Zünd- oder Glühelement vorgesehen. Entsprechend sind in gleicher Weise derartige Aussparungen in den übrigen Zylinderversorgungsbereichen vorgesehen. Entlang einer Mittellinie 13 der Zylinderversorgungsbereiche verläuft ein Spalt 20 des Kühlmantel-Gießkernes, der diesen trennt. Bei einem Gießvorgang wird der Bereich des Spaltes 20 mit Gussmaterial gefüllt und ein Steg aus Gussmaterial gebildet

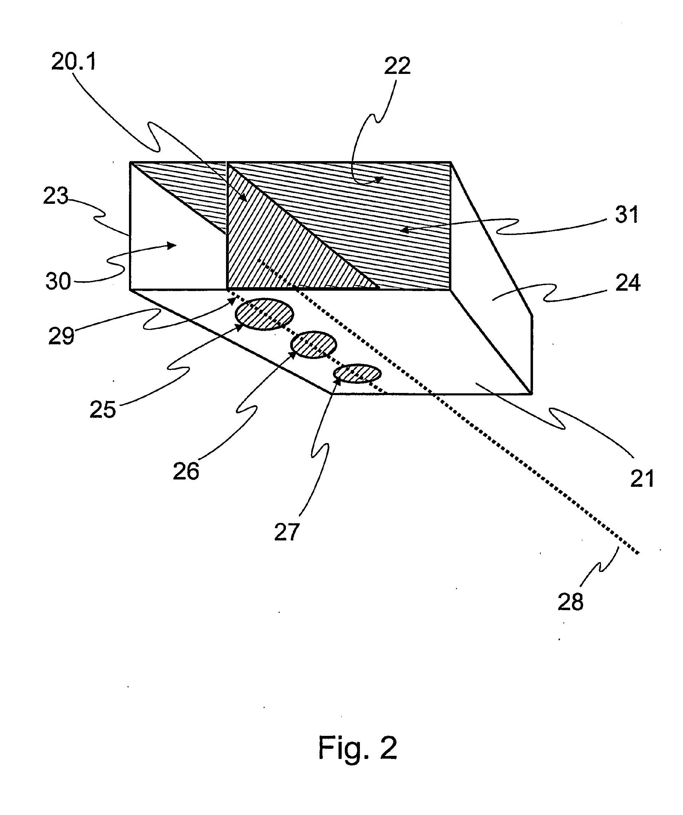

Figur 2 zeigt einen schematischen Querschnitt eines Zylinderkopfes. Hierbei handelt es sich um eine vereinfachende Darstellung eines Zylinderkopfes einer vierzylindrigen Verbrennungskraftmaschine, wobei der Schnitt zwischen einem hier jeweils nicht dargestellten dem Zylinderkopf zuzuordnenden ersten und einem zweiten Zylinder ausgeführt wurde.

Im folgenden werden gleichwirkende Bauelemente mit den gleichen Bezugszeichen und Bezeichnungen versehen.

Der Zylinderkopf ist hier vereinfachend als Quader gezeichnet, der ein Flammdeck 21, ein Oberdeck 22, eine erste 23 und eine zweite Seitenwand 24 sowie hier nicht dargestellte jeweils stirnseitige Wände umfasst. Das Flammdeck 21 umfasst eine erste 25, eine zweite 26 und eine dritte Überdeckung 27 eines Zylinders für die hier nicht dargestellten jeweils zugehörigen Zylinder der Verbrennungskraftmaschine. Diese Überdeckungen sind längs einer zweiten Längsachse 28 angeordnet. Im Zylinderkopf ist ein Steg 20.1 angeordnet, die hier als vertikaler Trennsteg ausgestaltet ist. Dieser Steg 20.1 ist so angeordnet, dass er mittig durch Querschnitte der Überdeckungen der Zylinder verläuft. Dies ist hier durch eine Projektion 29 des Steges 20.1 auf den Zylinderkopfboden 21 dargestellt. Der Steg 20.1 teilt den Zylinderkopf längs in einen ersten Teil 30 und einen zweiten Teil 31 eines Kühlmantels. In diesem vereinfachenden Beispiel sind diese beiden Teile längs von einem Kühlmittel durchströmbar. Entgegen der hier vereinfachten Darstellung kann ein Zylinderkopf insbesondere näherungsweise senkrecht zum Zylinderkopfboden 21 entsprechend der Ausführungen zu Fig. 1 auch wenigstens von einem Dom oder einer Pfeife, beispielsweise zumindest für ein Gaswechselventil oder/und einen Injektor und/oder einer Verschraubung durchsetzt sein. Des weiteren kann der Zylinderkopf auch wenigstens ein Zwischendeck umfassen.

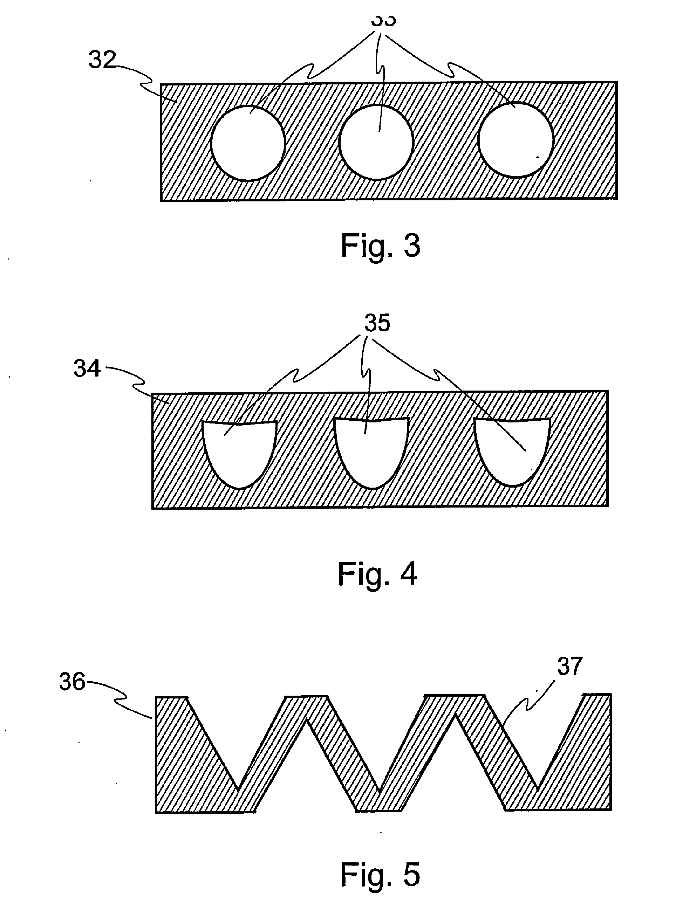

Fig. 3 zeigt einen ersten Steg 32, in diesem Fall in einer Seitenansicht. Dieser Steg ist mit kreisförmigen Aussparungen 33 versehen. Diese ermöglichen insbesondere eine leichte Bauweise bei zumindest annähernd gleicher Stabilität eines durchgängigen Steges. Beispielsweise können die kreisförmigen Aussparungen 33, so angeordnet werden, dass im Bereich einer Pfeife oder eines Domes, insbesondere eines Domes eines Injektors, eine Umströmung desselbigen gewährleistet wird. Der erste Steg 32 kann völlig gerade in einer Ebene, die der Zeichenebene entspricht, verlaufen. Gleichermaßen kann der erste Steg 32 jedoch zumindest teilweise auch außerhalb dieser Ebene verlaufen. Beispielsweise kann der erste Steg 32 mäanderförmig, zickzackförmig oder allgemein unregelmäßig in Bezug auf diese Ebene verlaufen. Insbesondere kann der erste Steg 32 wenigstens einer Torsion unterworfen sein.

Fig. 4 zeigt einen zweiten Steg 34. Dieser weist bogenförmige Aussparungen 35 auf. Diese ermöglichen insbesondere ebenso wie die in Fig. 3 gezeigten kreisförmigen Aussparungen eine leichte Bauweise bei zumindest annähernd gleicher Stabilität eines durchgängigen Steges. Des weiteren können die bogenförmigen Aussparungen 35, so angeordnet werden, dass im Bereich einer Pfeife oder eines Domes, insbesondere eines Domes eines Injektors, eine Umströmung desselbigen gewährleistet wird. Entgegen der hier gezeigten Darstellung können die Aussparungen auch entsprechend asymmetrisch ausgestaltet sein, um beispielsweise eine Umströmung einer Pfeife oder eines Domes zu verbessern. Ebenso wie der in Fig. 3 gezeigte erste Steg kann auch der zweite Steg 34 völlig gerade in einer Ebene, die der Zeichenebene entspricht, verlaufen. Gleichermaßen kann der zweite Steg 34 jedoch zumindest teilweise auch außerhalb dieser Ebene verlaufen. Beispielsweise kann auch der zweite Steg 34 mäanderförmig, zickzackförmig oder allgemein unregelmäßig in Bezug auf diese Ebene verlaufen. Auch der zweite Steg 34 kann wenigstens einer Torsion unterworfen sein.

Fig. 5 zeigt schließlich einen dritten Steg 36, der als Gitter-Rippenstruktur 37 ausgestaltet ist. Entgegen der hier gezeigten Darstellung kann die Gitter-Rippenstruktur 37 auch unregelmäßig verlaufen. Insbesondere kann sie gekrümmte Abschnitte aufweisen, so dass beispielsweise eine sinusförmige Seitenansicht resultiert. Ebenso wie der in Fig. 3 gezeigte erste Steg kann auch der dritte Steg 36 völlig gerade in einer Ebene, die der Zeichenebene entspricht, verlaufen. Gleichermaßen kann der dritte Steg 36 jedoch zumindest teilweise auch außerhalb dieser Ebene verlaufen. Beispielsweise kann der dritte Steg 36 mäanderförmig, zickzackförmig oder allgemein unregelmäßig in Bezug auf diese Ebene verlaufen. Auch der dritte Steg 36 kann wenigstens einer Torsion unterworfen sein. Insbesondere kann der dritte Steg 36 so ausgestaltet sein, dass Umkehrpunkte der Zickzackstruktur in verschiedenen Ebenen liegen.

## Patentansprüche

1. Kühlmantel-Gießkern (1) zur Herstellung eines Zylinderkopfes einer Verbrennungskraftmaschine, wobei der Kühlmantel-Gießkern (1) wenigstens eine Abformung eines Kühlmantels (2) umfasst, **dadurch gekennzeichnet, dass** der Kühlmantel-Gießkern (1) im wesentlichen in Richtung einer Kurbelwellen-Längsachse einen sich erstreckenden Spalt (20) aufweist, der den Kühlmantel-Gießkern (1) zumindest in einem Abschnitt trennt.

2. Kühlmantel-Gießkern (1) nach Anspruch 1, **dadurch gekennzeichnet, dass** der Spalt (20) zumindest teilweise in der Abformung des Kühlmantels verläuft.

3. Kühlmantel-Gießkern (1) nach Anspruch 1 oder 2, **dadurch gekennzeichnet, dass** der Spalt (20) zumindest näherungsweise eine Höhe aufweist, die senkrecht zu der Längsachse des Kühlmantel-Gießkerns (1) angeordnet ist.

4. Kühlmantel-Gießkern (1) nach Anspruch 1, 2 oder 3, **dadurch gekennzeichnet, dass** sich der Spalt (20) über eine volle Höhe des Kühlmantel-Gießkernes erstreckt.

5. Kühlmantel-Gießkern (1) nach einem der vorhergehenden Ansprüche, **dadurch gekennzeichnet, dass** sich der Spalt (20) zumindest annähernd entlang des gesamten Kühlmantel-Gießkerns erstreckt.

6. Kühlmantel-Gießkern (1) nach einem der vorhergehenden Ansprüche, **dadurch gekennzeichnet, dass** eine Oberfläche des Spalts (20) eine invertierte Gitterstruktur oder/und Bogenstruktur aufweist.

7. Kühlmantel-Gießkern (1) nach einem der vorhergehenden Ansprüche, **dadurch gekennzeichnet, dass** der Kühlmantel-Gießkern (1) wenigstens zweiteilig ist.

8. Kühlmantel-Gießkern (1) nach einem der vorhergehenden Ansprüche, **dadurch gekennzeichnet, dass** der Spalt (20) in eine Mehrzahl von Aussparungen übergeht und diese miteinander verbindet, wobei die Aussparungen jeweils zu einem inversen Abbild einer Pfeife und/oder eines Domes zugehörig sind.

9. Kühlmantel-Gießkern (1) nach einem der vorhergehenden Ansprüche, **dadurch gekennzeichnet, dass** der Spalt (20) sich außermittig zu einem inversen Brennraumdach durch den Kühlmantel-Gießkern (1) erstreckt.

10. Kühlmantel-Gießkern (1) nach einem der vorhergehenden Ansprüche, **dadurch gekennzeichnet, dass** der Kühlmantel-Gießkern (1) mit einem Rapid-Prototyping-System hergestellt ist.

11. Zylinderkopf einer Mehrzylinder-Verbrennungskraftmaschine, umfassend wenigstens ein Flammdeck (21), ein Oberdeck (22) und einen Fluidkühlungsmantel, **dadurch gekennzeichnet, dass** der Fluidkühlungsmantel mittels eines Steges (20.1), der sich vertikal und längs des Flammdecks (21) und des Oberdecks (22) erstreckt, zumindest über einen Abschnitt unterteilt ist.

12. Zylinderkopf nach Anspruch 11, **dadurch gekennzeichnet, dass** der Steg (20.1) sich über eine volle Höhe des Zylinderkopfes zwischen Flammdeck (21) und Oberdeck (22) erstreckt.

13. Zylinderkopf nach Anspruch 11, **dadurch gekennzeichnet, dass** der Steg (20.1) zumindest teilweise gitterförmig oder/und bogenförmig ist.

14. Zylinderkopf nach Anspruch 11, **dadurch gekennzeichnet, dass** der Steg (20.1) sich zumindest annähernd über eine Länge des gesamten Zylinderkopfes erstreckt.

15. Zylinderkopf nach Anspruch 11,**dadurch gekennzeichnet, dass** der Steg (20.1) eine insbesondere variierende Breite von 3 mm bis 10 mm aufweist.

16. Zylinderkopf nach Anspruch 11, **dadurch gekennzeichnet, dass** der Steg (20.1) mit einer Mehrzahl an Domen oder Pfeifen verbunden ist.

17. Zylinderkopf nach Anspruch 11, **dadurch gekennzeichnet, dass** der Fluidkühlungsmantel wenigstens zwei Kühlmittelpfade mit insbesondere verschiedenen Volumina umfasst, die durch den Steg (20.1) zumindest abschnittsweise getrennt sind.

18. Zylinderkopf nach Anspruch 11, **dadurch gekennzeichnet, dass** der Fluidkühlungsmantel wenigstens zweiteilig ist.

19. Zylinderkopf nach Anspruch 11, **dadurch gekennzeichnet, dass** als Zylinderkopfmaterial ein Leichtmetall, insbesondere eine Leichtmetalllegierung, ausgewählt ist.

20. Verfahren zur Herstellung eines Kühlmantels eines Zylinderkopfes einer Mehrzylinder-Verbrennungskraftmaschine, insbesondere eines Zylinderkopfes nach einem der Ansprüche 11 bis 19, mittels eines Gußverfahrens, **dadurch gekennzeichnet, dass** für den Kühlmantel ein Kühlmantel-Gießkern nach einem der Ansprüche 1 bis 10 verwendet wird, der so angeordnet ist, dass beim Vergießen ein in Richtung einer Längsachse angeordneter Steg (20.1) gebildet wird, der den Kühlmantel zumindest abschnittsweise trennt und sich zumindest näherungsweise senkrecht zu einer Längserstreckung des Kühlmantels erstreckt.

21. Verfahren nach Anspruch 20 **dadurch gekennzeichnet, dass** die Teile des Kühlmantel-Gießkerns (1) miteinander verklebt werden.

22. Verfahren nach Anspruch 20 oder 21, **dadurch gekennzeichnet, dass** als Gussmaterial ein Leichtmetall, eine Leichtmetalllegierung oder ein Grauguß verwendet wird.

## Claims

1. Cooling jacket casting core (1) for the production of a cylinder head of an internal combustion engine, wherein cooling jacket casting core (1) comprises at least one impression of a cooling jacket (2), **characterized in that** cooling jacket casting core (1) has a slot (20), extending substantially in the direction of a crankshaft longitudinal axis, that separates the cooling jacket casting core (1) at least in a section.

2. Cooling jacket casting core (1) according to Claim 1, **characterized in that** slot (20) runs at least partly in the impression of the cooling jacket.

3. Cooling jacket casting core (1) according to Claim 1 or 2, **characterized in that** slot (20) has at least one elevation that is arranged substantially perpendicular to the longitudinal axis of cooling jacket casting core (1).

4. Cooling jacket casting core (1) according to Claim 1, 2 or 3, **characterized in that** slot (20) extends over a full height of the cooling jacket casting core.

5. Cooling jacket casting core (1) according to one of the preceding claims, **characterized in that** slot (20) extends at least approximately along the entire cooling jacket casting core.

6. Cooling jacket casting core (1) according to one of the preceding claims, **characterized in that** one surface of the slot (20) has an inverted lattice structure and/or arch structure.

7. Cooling jacket casting core (1) according to one of the preceding claims, **characterized in that** cooling jacket casting core (1) is in at least two parts.

8. Cooling jacket casting core (1) according to one of the preceding claims, **characterized in that** slot (20) verges into a plurality of cavities and connects these to one another, wherein the cavities are each associated with an inverse image of a pipe and/or a dome.

9. Cooling jacket casting core (1) according to one of the preceding claims, **characterized in that** slot (20) runs through cooling jacket casting core (1) off center relative to an inverse combustion chamber roof.

10. Cooling jacket casting core (1) according to one of the preceding claims, **characterized in that** cooling jacket casting core (1) is manufactured with a rapid prototyping system.

11. Cylinder head of a multi-cylinder internal combustion engine, comprising at least a flame deck (21), an upper deck (22) and a fluid cooling jacket, **characterized in that** the fluid cooling jacket is partitioned at least in one section by means of a web (20.1) that runs vertically and along flame deck (21) and upper deck (22).

12. Cylinder head according to Claim 11, **characterized in that** web (20.1) extends over a full height of the cylinder head between flame deck (21) and upper deck (22).

13. Cylinder head according to Claim 11, **characterized in that** web (20.1) is lattice-shaped and/or arch-shaped, at least in part.

14. Cylinder head according to Claim 11, **characterized in that** web (20.1) extends at least approximately over a length of the entire cylinder head.

15. Cylinder head according to Claim 11, **characterized in that** web (20.1) has, in particular, a varying width of 3 mm to 10 mm.

16. Cylinder head according to Claim 11, **characterized in that** web (20.1) is connected to a plurality of domes or pipes.

17. Cylinder head according to Claim 11, **characterized in that** the fluid cooling jacket comprises at least two coolant paths with, in particular, different volumes, which at least in sections are separated by web (20.1).

18. Cylinder head according to Claim 11, **characterized in that** the fluid cooling jacket is in at least two parts.

19. Cylinder head according to Claim 11, **characterized in that** a light metal, in particular a light metal alloy, is selected as cylinder head material.

20. Method for the production of a cooling jacket of a cylinder head of a multi-cylinder internal combustion engine, in particular a cylinder head according to one of Claims 11 to 19, by means of a casting process, **characterized in that**, for the cooling jacket, a cooling jacket casting core according to one of Claims 1 to 10 is used that is so arranged that a longitudinally arranged web (20.1), which separates the cooling jacket at least in sections and runs at least approximately perpendicular to a longitudinal extension of the cooling jacket, is formed in the casting.

21. Method according to Claim 20, **characterized in that** the parts of cooling jacket casting core (1) are adhered to one another.

22. Method according to Claim 20 or 21, **characterized in that** a light metal, a light metal alloy or a grey cast iron is used as casting material.

## Revendications

1. Noyau de coulée (1) de chemise de refroidissement pour la production d'une culasse de cylindre de moteur à combustion interne, le noyau de coulée (1) de chemise de refroidissement comprenant au moins un moulage d'une chemise de refroidissement (2), **caractérisé en ce que** le noyau de coulée (1) de chemise de refroidissement présente une fente (20) qui se prolonge essentiellement dans la direction de l'axe longitudinale d'un vilebrequin et sépare le noyau de coulée (1) de chemise de refroidissement au moins en une section.

2. Noyau de coulée (1) de chemise de refroidissement selon la revendication 1, **caractérisé en ce que** la fente (20) s'étend au moins partiellement dans le moulage de la chemise de refroidissement.

3. Noyau de coulée (1) de chemise de refroidissement selon la revendication 1 ou 2, **caractérisé en ce que** la fente (20) présente au moins approximativement une hauteur située perpendiculairement à l'axe longitudinal du noyau de coulée (1) de chemise de refroidissement.

4. Noyau de coulée (1) de chemise de refroidissement selon la revendication 1, 2 ou 3, **caractérisé en ce que** la fente (20) se prolonge sur une totalité de la hauteur du noyau de coulée de chemise de refroidissement.

5. Noyau de coulée (1) de chemise de refroidissement selon l'une des revendications précédentes, **caractérisé en ce que** la fente (20) se prolonge au moins approximativement le long de l'intégralité du noyau de coulée de chemise de refroidissement.

6. Noyau de coulée (1) de chemise de refroidissement selon l'une des revendications précédentes, **caractérisée en ce qu'**une surface de la fente (20) présente une structure de grille inversée ou/et d'arc.

7. Noyau de coulée (1) de chemise de refroidissement selon l'une des revendications précédentes, **caractérisé en ce que** le noyau de coulée (1) de chemise de refroidissement est constitué d'au moins deux pièces.

8. Noyau de coulée (1) de chemise de refroidissement selon l'une des revendications précédentes, **caractérisé en ce que** la fente (20) passe par une pluralité d'évidements en les reliant entre eux, les évidements correspondant respectivement à une image inversée de conduite et/ou de dôme.

9. Noyau de coulée, (1) de chemise de refroidissement selon l'une des revendications précédentes, **caractérisé en ce que** la fente (20) se prolonge de manière excentrée par rapport à un plafond de chambre à combustion inversé à travers le noyau de coulée (1) de chemise de refroidissement.

10. Noyau de coulée (1) de chemise de refroidissement selon l'une des revendications précédentes, **caractérisé en ce que** le noyau de coulée (1) de chemise de refroidissement est produit à l'aide d'un système de prototypage rapide.

11. Culasse de cylindre d'un moteur à combustion interne multicylindrique, comprenant au moins un pare-flamme (21), un pont supérieur (22) et une chemise de refroidissement par fluide, **caractérisé en ce que** la chemise de refroidissement par fluide est subdivisée au moins sur une section par une âme (20.1) s'étendant verticalement et longitudinalement par rapport au pare-flamme (21) et au pont supérieur (22).

12. Culasse de cylindre selon la revendication 11, **caractérisée en ce que** l'âme (20.1) s'étend sur la totalité d'une hauteur de la culasse de cylindre entre le pare-flamme (21) et le pont supérieur (22).

13. Culasse de cylindre selon la revendication 11, **caractérisée en ce que** l'âme (20.1) est au moins partiellement en forme de grille ou/et d'arc.

14. Culasse de cylindre selon la revendication 11, **caractérisée en ce que** l'âme (20.1) se prolonge au moins approximativement sur une longueur de l'intégralité de la culasse de cylindre.

15. Culasse de cylindre selon la revendication 11, **caractérisée en ce que** l'âme présente (20.1) une largeur variant particulièrement de 3 mm à 10 mm.

16. Culasse de cylindre selon la revendication 11, **caractérisée en ce que** l'âme (20.1) est reliée à une pluralité de dômes ou de conduites.

17. Culasse de cylindre selon la revendication 11, **caractérisée en ce que** la chemise de refroidissement par fluide comprend au moins deux voies de fluide de refroidissement dont les volumes sont notamment différents et qui sont séparées au moins partiellement par l'âme (20.1).

18. Culasse de cylindre selon la revendication 11, **caractérisée en ce que** la chemise de refroidissement par fluide se compose d'au moins deux pièces.

19. Culasse de cylindre selon la revendication 11, **caractérisée en ce que** le matériau de la culasse de cylindre est un métal léger, par exemple un alliage de métaux légers.

20. Procédé pour la production d'une chemise de refroidissement d'une culasse de cylindre de moteur à combustion interne multicylindrique, par exemple d'une culasse de cylindre selon l'une des revendications 11 à 19, au moyen d'un procédé de coulée, **caractérisé en ce qu'**on utilise, pour la chemise de refroidissement, un noyau de coulée de chemise de refroidissement selon l'une des revendications 1 à 10 qui est agencé de telle manière qu'il se forme lors de la coulée une âme (20.1) située dans la direction d'un axe longitudinal séparant la chemise de refroidissement au moins partiellement et se prolongeant au moins approximativement perpendiculairement par rapport au prolongement longitudinal de la chemise de refroidissement.

21. Procédé selon la revendication 20 **caractérisé en ce que** les pièces du noyau de coulée de chemise de refroidissement (1) sont collées les unes aux autres.

22. Procédé selon la revendication 20 ou 21, **caractérisé en ce qu'**on utilise comme matériau de coulée un métal léger, un alliage de métaux légers ou de la fonte grise.
